# EUROPEAN PATENT APPLICATION

(11) **EP 4 296 914 A1**
(43) Date of publication of application: **27.12.2023**
(21) Application number: 22756241.0
(22) Date of filing: 16.02.2022
(51) Int. Cl.: G06Q 10/04, A61B 10/00, G06N 20/00, G16Y 40/20

(54) **INFORMATION PROCESSING DEVICE AND PROGRAM**

(30) Priority: 16.02.2021 JP 2021022839
(71) Applicant: Revorn Co., Ltd., Tokyo 104-0033 (JP)
(72) Inventor: MATSUOKA Hiroaki, Tokyo 150-0022 (JP); MOTOHIDA Yuko, Tokyo 150-0022 (JP)
(74) Representative: Winter, Brandl - Partnerschaft mbB
(86) International application number: PCT/JP2022/006225
(87) International publication number: WO 2022/176923

(57) **Abstract**

[Problem] To provide an information processing device and a program each of which, in olfactory sensor data analysis, takes a human sensation as an analytical element and makes a correction if there is a difference from a human sensation so that it is possible to produce an output involving a sensation close to a human sensation. [Solution] One aspect of the present invention provides an information processing device. This information processing device comprises a generation unit, an acquisition unit, a learning unit, and a determination unit. According to a designated number of indices, the generation unit generates a template into which the respective evaluations for the indices can be input. The acquisition unit acquires the evaluations which have been input into the template and smell information which corresponds to the evaluations. The smell information is the results of detection by a smell sensor. The learning unit carries out machine learning with, as training data, a combination of the evaluations and the smell information. On the basis of the results of the machine learning, the determination unit determines the smell information of a determination target for each index.

## Description

### BACKGROUND

The present invention relates to an information processing apparatus and a program.

### RELATED ART

Evaluation of agricultural produce and food product is a process that needs to rely on nose of sensory evaluator, and there is a need to mechanize the process. Patent Document 1 discloses a technology measuring and identifying odor information of an object.

### PRIOR ART DOCUMENTS

### Patent document

[Patent Document 1] WO 2020/116490 A1

### SUMMARY

### Problems to be Solved by Invention

In light of the above circumstances, the present invention provides an information processing apparatus and a program that enables output closer to human sensation by incorporating human sensation as analysis element in olfactory sensor data analysis and correcting when different from human sensation.

### Means for Solving Problems

According to an aspect of the present invention, an information processing apparatus is provided. The information processing apparatus comprises a generation unit, an acquisition unit, a learning unit, and a determination unit. The generation unit is configured to generate a template that allows input of evaluation for each index according to specified number of index. The acquisition unit is configured to acquire evaluation input to the template and odor information corresponding to the evaluation. The odor information is a detection result detected by an odor sensor. The learning unit is configured to perform machine learning using a set of the evaluation and the odor information as teaching data. The determination unit is configured to determine odor information of a determination target for the each index based on a result of the machine learning.

Such an aspect of the present invention enables output closer to human sensation by incorporating human sensation as analysis element in olfactory sensor data analysis and correcting when different from human sensation.

### BRIEF DESCRIPTION OF DRAWINGS

FIG. 1 shows a configuration example of a system 100 according to an embodiment of the present invention.
FIG. 2 shows a configuration of an information processing apparatus 1.
FIG. 3 shows a configuration of a measurement apparatus 4.
FIG. 4 shows a configuration of an information processing terminal 5.
FIG. 5 shows a configuration of a measurement apparatus 6.
FIG. 6 is a block diagram showing a functional configuration of an information processing apparatus 1.
FIG. 7 is an activity diagram showing a flow of odor information registration.
FIG. 8 is an activity diagram showing a flow of template generation.
FIG. 9 shows an example of an input screen of index.
FIG. 10 shows an example of an input screen of evaluation value.
FIG. 11 is an activity diagram showing a flow of odor determination.
FIG. 12 shows an example of a graph presented by a presentation unit 105.

### DETAILED DESCRIPTION

Hereinafter, embodiment of the present invention will be described with reference to the drawings. Various features described in the embodiment below can be combined with each other.

A program for realizing a software in the present embodiment may be provided as a non-transitory computer readable storage medium that can be read by a computer, may be provided for download from an external server, or may be provided in such a manner that the program can be activated on an external computer to realize function thereof on a client terminal (so-called cloud computing).

In the present embodiment, the term "unit" may include, for instance, a combination of hardware resources implemented by a circuit in a broad sense and information processing of software that can be concretely realized by these hardware resources. Further, various information is performed in the present embodiment, and the information can be represented by, for instance, physical values of signal values representing voltage and current, high and low signal values as a set of binary bits consisting of 0 or 1, or quantum superposition (so-called qubits), and communication/calculation can be performed on a circuit in a broad sense.

Further, the circuit in a broad sense is a circuit realized by combining at least an appropriate number of a circuit, a circuitry, a processor, a memory, or the like. In other words, it is a circuit includes application specific integrated circuit (ASIC), programmable logic device (e.g., simple programmable logic device (SPLD), complex programmable logic device (CPLD), field programmable gate array (FPGA)), or the like.

### 1. Overall configuration

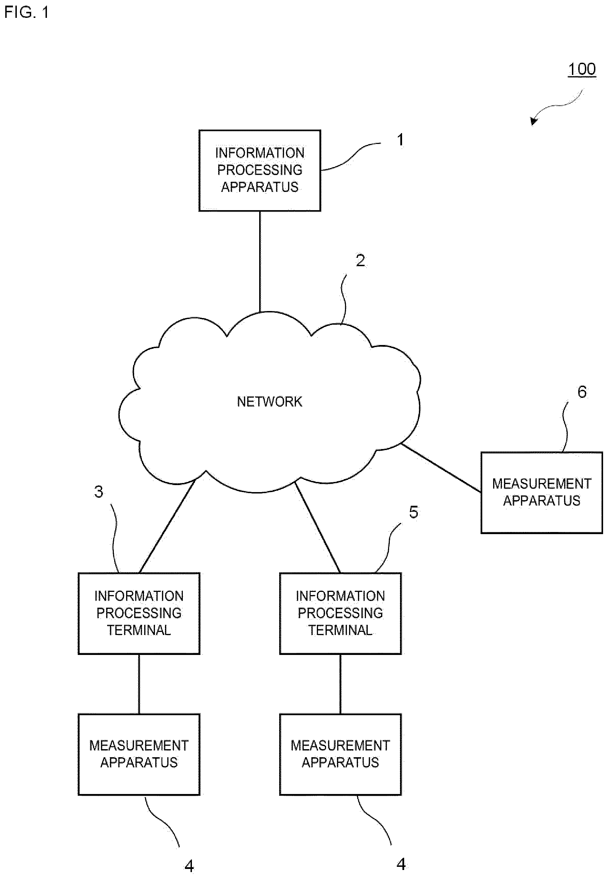

FIG. 1 shows a configuration of a system 100 according to an embodiment of the present invention. As shown in the drawing, the system 100 is configured by connecting an information processing apparatus 1 to a network 2. An information processing terminal 3 and an information processing terminal 5 are connected to the network 2, and a measurement apparatus 4 is connected to the information processing terminal 3 and the information processing terminal 5, respectively. Further, a measurement apparatus 6 may be connected to the network 2. There is no limit to number of information processing terminal 3, number of information processing terminal 5, and number of measurement apparatus 6 connected to the network 2, and at least one of them, including the information processing terminal 3 and the measurement apparatus 4, need only be connected to the network 2. The information processing terminal 3, the information processing terminal 5, and the measurement apparatus 6 may be connected to the network 2 as necessary and need not be always connected.

The information processing apparatus 1 performs determination of odor detected by the measurement apparatus 4 or the measurement apparatus 6. The network 2 enables communication between the information processing apparatus 1, the information processing terminal 3, the information processing terminal 5, and the measurement apparatus 6, and includes, for instance, the Internet. The information processing terminal 3 is a computer, which may be a desktop or notebook type, and communicates with the information processing apparatus 1 and controls the measurement apparatus 4. The measurement apparatus 4 includes a sensor and performs odor detection. The information processing terminal 5 is a tablet, a smartphone, or a portable computer, and communicates with the information processing apparatus 1 and controls the measurement apparatus 4. The measurement apparatus 6, same as the measurement apparatus 4, is configured to perform odor detection and communicate with the information processing apparatus 1 without going through the information processing terminal 3 or the like.

### 2. Configuration of information processing apparatus 1

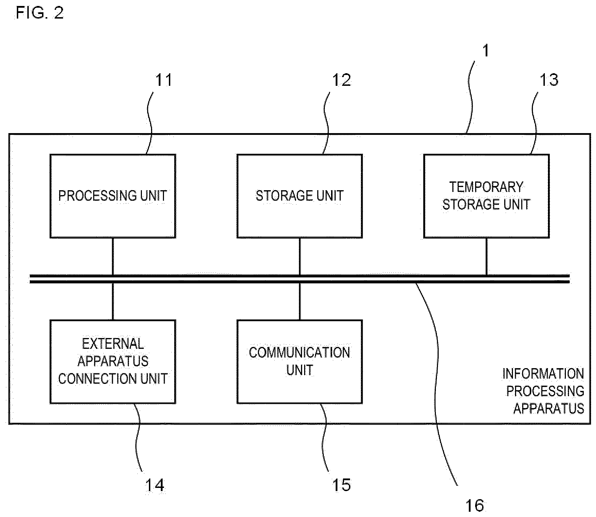

Next, a configuration of the information processing apparatus 1 will be described. FIG. 2 shows the configuration of the information processing apparatus 1. As shown in the drawing, the information processing apparatus 1 comprises a processing unit 11, a storage unit 12, a temporary storage unit 13, an external apparatus connection unit 14, and a communication unit 15, which are electrically connected via a communication bus 16 within the information processing apparatus 1.

The processing unit 11 is realized by a central processing unit (CPU), for instance, and operates according to a predetermined program stored in the storage unit 12 to realize various functions.

The storage unit 12 is a nonvolatile storage medium that stores various information, and is realized, for instance, by a storage device such as a hard disk drive (HDD) or a solid state drive (SSD). The storage unit 12 may be arranged in another apparatus communicable with the information processing apparatus 1.

The temporary storage unit 13 is a volatile storage medium, and is realized by a memory such as random access memory (RAM), for example, and stores temporarily necessary information (argument, array, etc.) when the processing unit 11 operates.

The external apparatus connection unit 14 is a connection unit in compliance with standard such as universal serial bus (USB) or highdefinition multimedia interface (HDMI (registered trademark)), and can connect an input apparatus such as a keyboard or a display apparatus such as a monitor.

The communication unit 15 is a communication means in compliance with, for instance, a local area network (LAN) standard, and realizes communication between the information processing apparatus 1 and the network 2 such as a local area network or the Internet via the network.

In addition, the information processing apparatus 1 may utilize a computer or a personal computer for general purpose server, and the information processing apparatus 1 may be configured by utilizing two or more computers.

### 3. Configuration of information processing terminal 3

The information processing terminal 3 is a computer, and a configuration thereof is the same as that of the information processing apparatus 1. For this reason, a detailed explanation is omitted.

### 4. Configuration of measurement apparatus 4

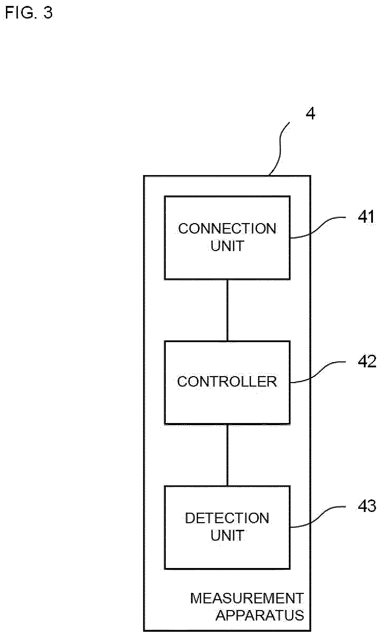

FIG. 3 shows a configuration of the measurement apparatus 4. As shown in the drawing, the measurement apparatus 4 comprises a connection unit 41, a controller 42, and a detection unit 43.

The connection unit 41 is in compliance with standard such as universal serial bus or Bluetooth (registered trademark), for instance, and connects the information processing terminal 3, etc. The controller 42 controls operation of the detection unit 43 and transmit/receive information with the information processing terminal 3, etc. The detection unit 43 includes a sensor detecting odor. The sensor included in the detection unit 43 is, for instance, a sensor that detect gas such as carbon dioxide, carbon monoxide, methane, butane, ammonia, etc. or two or more Quartz Crystal Microbalance sensors, each Quartz Crystal Microbalance sensor has a quartz crystal formed by a thin film having non-specific adsorption properties, and each of the quartz oscillator sensors deposited with a different compound. The deposited compound is, for instance, D-phenylalanine, D-tyrosine, DL-histidine, D-glucose, adenine, polyethylene, etc. For any one of these compounds, resonance frequency changes due to adhesion of odor component, and since degree of adhesion of the odor component varies from compound to compound, each of the quartz oscillator sensors can detect different odor.

### 5. Configuration of information processing terminal 5

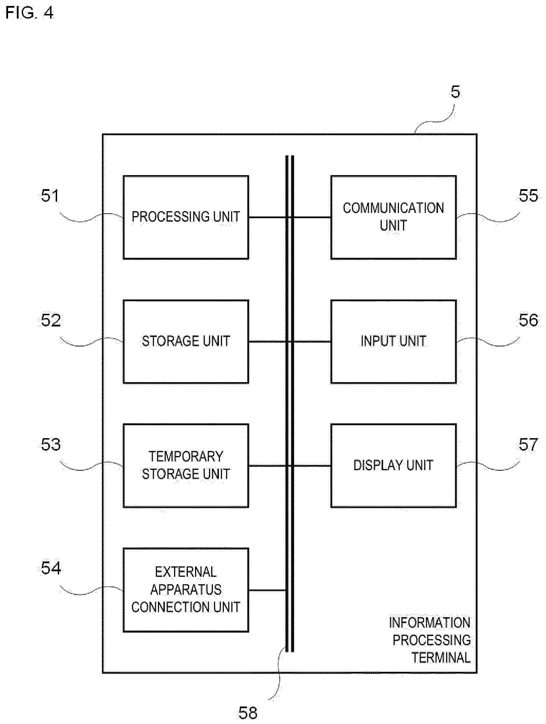

FIG. 4 shows a configuration of the information processing terminal 5. As shown in the drawing, the information processing terminal 5 comprises a processing unit 51, a storage unit 52, a temporary storage unit 53, an external apparatus connection unit 54, a communication unit 55, an input unit 56, and a display unit 57, which are electrically connected via a communication bus 58 within the information processing terminal 5.

The processing unit 51 is realized by a CPU, for instance, and operates according to a predetermined program stored in the storage unit 52 to realize various functions.

The storage unit 52 is a nonvolatile storage medium that stores various information.

The temporary storage unit 53 is a volatile storage medium, and is realized by a memory, such as a random access memory, for instance, and stores temporarily necessary information (argument, array, etc.) when the processing unit 51 operates.

The external apparatus connection unit 54 is a connection unit in compliance with standard such as universal serial bus or Bluetooth (registered trademark), for example, and may connect the measurement apparatus 4 or the like.

The communication unit 55 is a communication means in compliance with, for instance, a local area network (LAN) standard, and realizes communication between the information processing apparatus 1 and the network 2 such as a local area network or the Internet via the network. Further, the communication unit 55 includes a communication means capable of communicating through a cellular phone network.

The input unit 56 is configured to receive operation input. The display unit 57 is configured to display information or the like on a screen. The input unit 56 and the display unit 57 may be integrated as a touch panel.

A general-purpose smartphone, a tablet terminal, etc. can be utilized for the information processing terminal 5.

### 6. Configuration of measurement apparatus 6

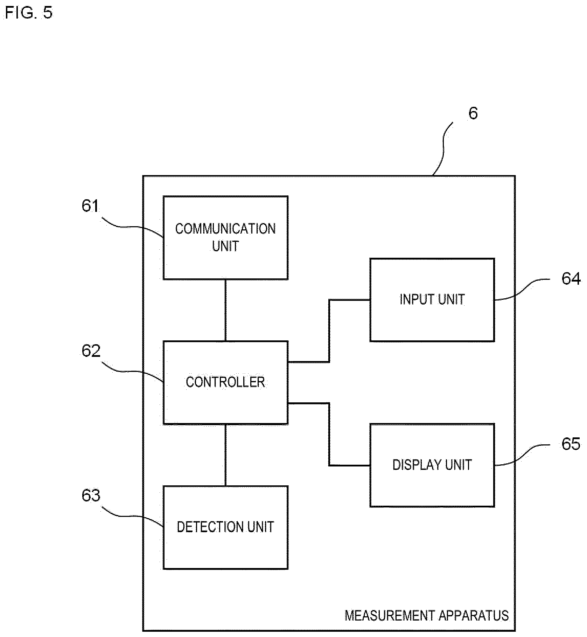

FIG. 5 shows a configuration of the measurement apparatus 6. As shown in the drawing, the measurement apparatus 6 comprises a communication unit 61, a controller 62, a detection unit 63, an input unit 64, and a display unit 65.

The communication unit 61 is a communication means in compliance with, for example, a local area network standard and realizes communication between the measurement apparatus 6 and the network 2 such as a local area network or the Internet via the network. Further, the communication unit 61 may include communication means capable of communicating via a cellular phone network.

The controller 62 controls operation of the detection unit 63 and transmits/receives information with the information processing apparatus 1 or the like. The detection unit 63, same as the detection unit 43, includes a sensor that detects odor.

The input unit 64 is configured to receive operation input. The display unit 65 is configured to display information or the like on a screen. The input unit 64 and the display unit 65 may be integrated as a touch panel.

### 7. Functional configuration of information processing apparatus 1

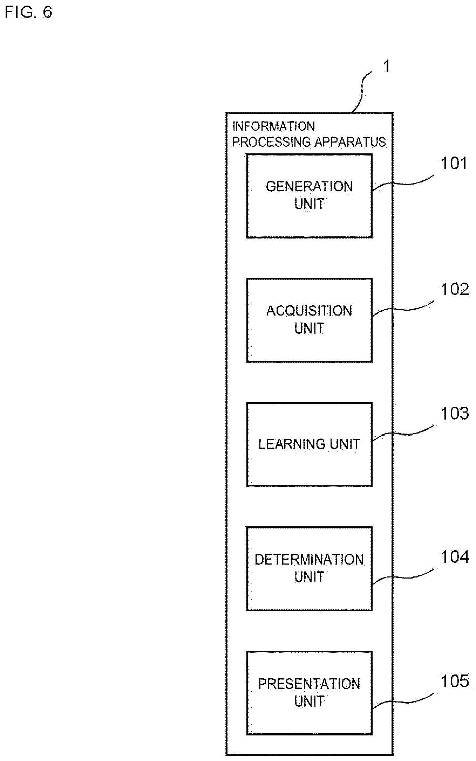

Next, function of the information processing apparatus 1 will be described. FIG. 6 is a block diagram showing a functional configuration of the information processing apparatus 1.

As shown in FIG. 6, the information processing apparatus 1 comprises a generation unit 101, an acquisition unit 102, a learning unit 103, a determination unit 104, and a presentation unit 105. Each of these functional units is realized by a program that causes the computer to function as an information processing apparatus, and specifically, is realized by the processing unit 11 operates according to the program, and during the operation, the processing unit 11 allows the storage unit 12, the temporary storage unit 13, the external apparatus connection unit 14, and the communication unit 15 to operate as necessary.

The generation unit 101 is configured to generate a template in response to instruction from the information processing terminal 3, the information processing terminal 5, and the measurement apparatus 6. The template is applied for learning by the learning unit 103 and determination by the determination unit 104. In the template, word or phrase representing human sensation can be used as an index for identifying odor.

The acquisition unit 102 is configured to acquire instruction or odor information from the information processing terminal 3, the information processing terminal 5, and the measurement apparatus 6. The instruction or the odor information is notified or transmitted to the information processing apparatus 1 by a user operating following a screen presented by the presentation unit 105 to the information processing terminal 3, the information processing terminal 5, or the measurement apparatus 6, and the acquisition unit 102 is configured to perform acquisition of the instruction or the odor information.

The learning unit 103 is configured to perform machine learning using a set of the template generated by the generation unit 101 and the odor information acquired by the acquisition unit 102 as teaching data to generate learned data for determining odor information of a determination target.

The determination unit 104 is configured to determine the odor information of the determination target acquired by the acquisition unit 102 based on the learned data generated by the learning unit 103.

The presentation unit 105 is configured to present the information processing terminal 3, the information processing terminal 5, and the measurement apparatus 6 with a screen for executing instruction, a screen for transmitting odor information, or a screen for confirming a determination result by the determination unit 104. The determination result by the determination unit 104 is presented, for example, as a graph.

### 8. Operation of information processing apparatus 1

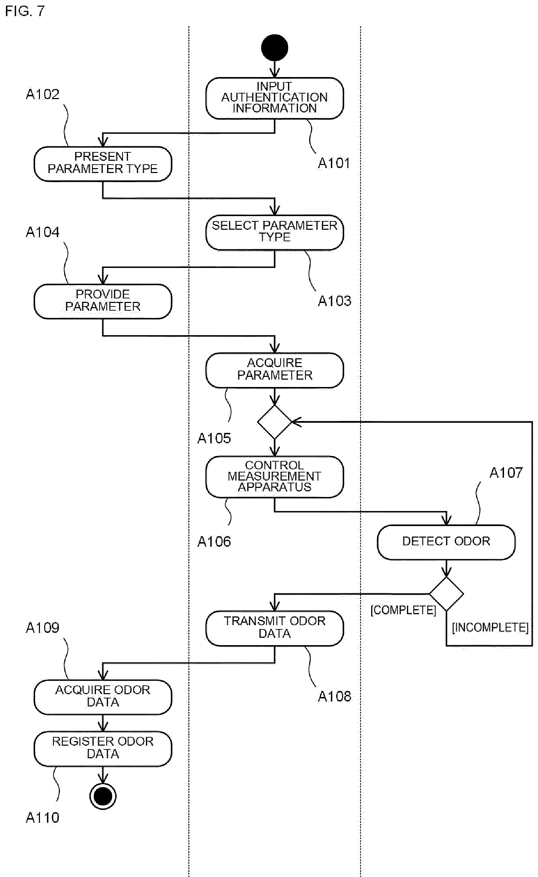

Hereinafter, operation of the information processing apparatus 1 will be described, while registration of odor information will be illustrated first. FIG. 7 is an activity diagram showing a flow of odor information registration. Here, although registration of odor information from the information processing terminal 3 connected to the measurement apparatus 4 is illustrated as an example, the operation of the information processing apparatus 1 is the same when registering odor information from the information processing terminal 5 connected to the measurement apparatus 4 and the measurement apparatus 6.

First, when the information processing terminal 3 accesses the information processing apparatus 1 by inputting authentication information, etc. (A101), the presentation unit 105 of the information processing apparatus 1 presents to the information processing terminal 3 type of parameter set necessary for acquiring odor information in a selectable manner (A102). The parameter type to be presented may be all types, or may be a type selected according to the input authentication information. The parameter is set when allowing the measurement apparatus 4 to operate, for instance, sampling rate, measurement time, or the like.

Subsequently, when one of the parameter types is selected by the information processing terminal 3 (A 103), in the information processing apparatus 1, the acquisition unit 102 receives this selection, the presentation unit 105 provides the parameter to the information processing terminal 3 (A 104), and the information processing terminal 3 acquires the parameter (A105). The information processing terminal 3 does not necessarily need to receive the parameter provided from the information processing apparatus 1, and in this case, processing of A102 to A105 can be omitted.

Next, the information processing terminal 3 controls the measurement apparatus 4, i.e., the sensor that detects the odor, according to the parameter (A106). The measurement apparatus 4 accordingly performs odor detection (A107). Since odor detection involves, for example, pre-cleaning, suction, retention, and post-cleaning steps, the measurement apparatus 4 executes odor detection until all of these steps are completed (A107).

When the odor detection by the measurement apparatus 4 is completed, the information processing terminal 3 transmits a detection result to the information processing apparatus 1 (A 108), and the acquisition unit 102 of the information processing apparatus 1 acquires the detection result (A109), allows a storage unit (not shown) to storage, and register the detection result (A110).

As odor information registered in the information processing apparatus 1, there are odor information for learning and odor information of a determination target, but both are registered in the same manner. Further, the odor information can be registered at any time.

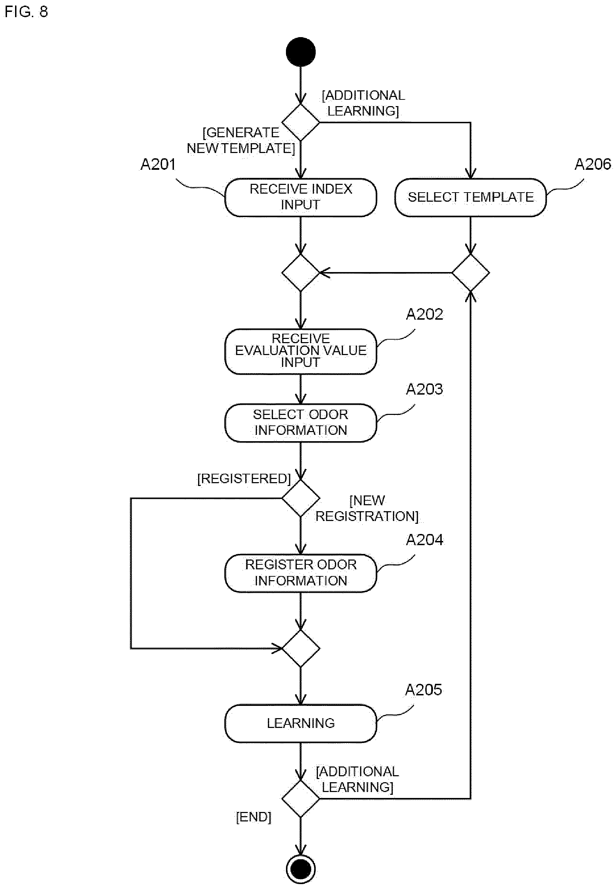

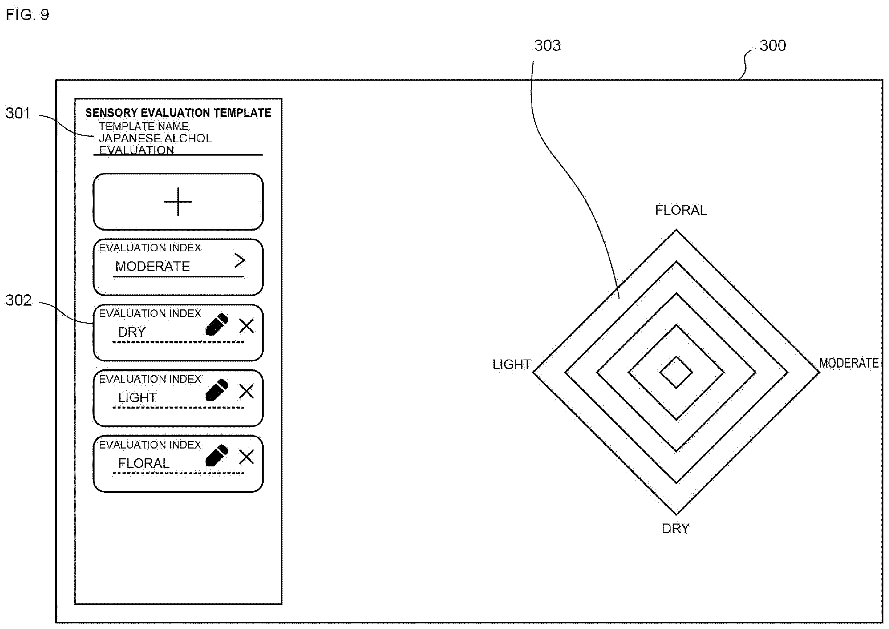

Next, generation of template will be described. FIG. 8 is an activity diagram showing a flow of template generation. When the information processing apparatus 1 receives an instruction to generate a new template from any one of the information processing terminal 3, the information processing terminal 5, and the measurement apparatus 6, the presentation unit 105 presents an input screen of index to the information processing terminal 3, etc., and receives an index input to the input screen (A201). FIG. 9 shows an example of input screen of index. As shown in the drawing, an input screen 300 of index displays a template name input column 301 and an index input column 302, and any number of index can be input to the index input column 302. The index corresponds to word or phrase representing human sensation. For instance, indices for evaluating Japanese alcohol may be "floral," "light," "dry," "moderate," "heavy," "mellow," or the like. The input screen 300 may display a graph 303 with a shape corresponding to the number of index. By changing order of the index in the index input column 302, position of the index in the graph 303 can be changed. In response to input to the input screen 300, the generation unit 101 generates a template in which evaluation for each index can be input according to the specified number of index.

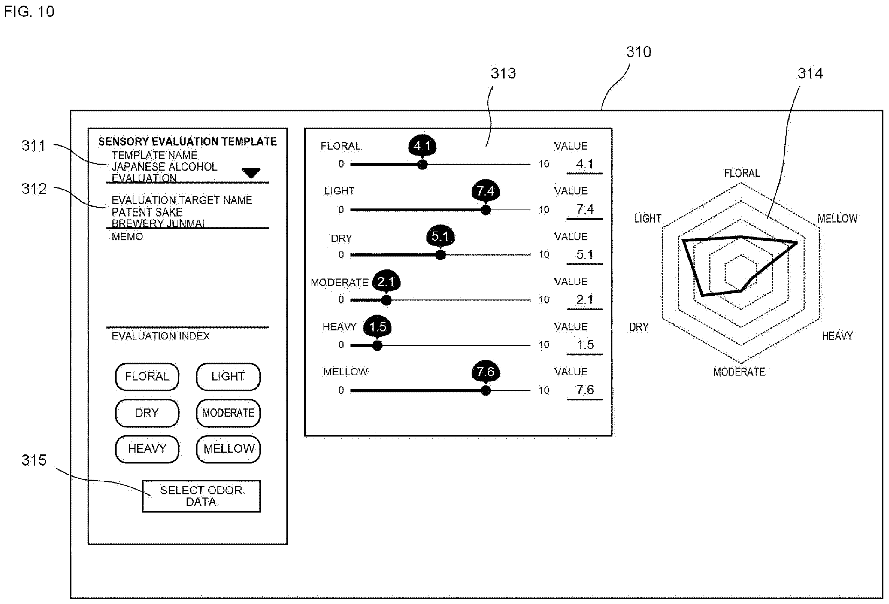

After the generation unit 101 generates the template, the presentation unit 105 presents an evaluation input screen visualizing the template to the information processing terminal 3, etc., and receives evaluation value input to the input screen (A202). FIG. 10 shows an example of the input screen of evaluation value. As shown in the drawing, an input screen 310 of evaluation value displays a template name display column 311, an evaluation target name input column 312, an evaluation value input column 313, a graph 314, and an odor information selection object 315. The template name display column 311 displays a name given to the template when the template is generated, and the evaluation target name input column 312 is a column for inputting a name of evaluation target, for example, product name of Japanese alcohol. The evaluation value input column 313 is a column for inputting evaluation for the evaluation target, and is configured in such a manner that evaluation can be input by input or selection of a value. The value corresponds to specified number of evaluation stage. The evaluation is a value evaluated by an evaluator, and is preferably an evaluation made by a skilled person such as a Japanese Sake Connoisseur. The value input in the evaluation value input column 313 is input in the graph 314. The acquisition unit 102 receives the evaluation input to the template (A202) and acquires the evaluation.

Further, the acquisition unit 102 acquires odor information corresponding to the evaluation input in the template. Acquisition of the odor information is performed by selecting and acquiring from the storage unit (not shown) the one selected by operation of the odor information selection object 315 (A203), and at this timing, registration of the odor information may be received (A204). The odor information is a detection result detected by an odor sensor such as the measurement apparatus 4.

Next, the learning unit 103 performs machine learning using a set of the input evaluation and the odor information as teaching data (A205). At this time, it may be possible to select a learning algorithm from the information processing terminal 3 or the like, and the learning unit 103 performs machine learning based on the learning algorithm selected from two or more learning algorithms. In the case of additional learning using the same template, processing after A202 is repeated. When additional learning is performed on a different occasion, the generated template is selected without generating a new template (A206), and processing from A202 onwards is performed.

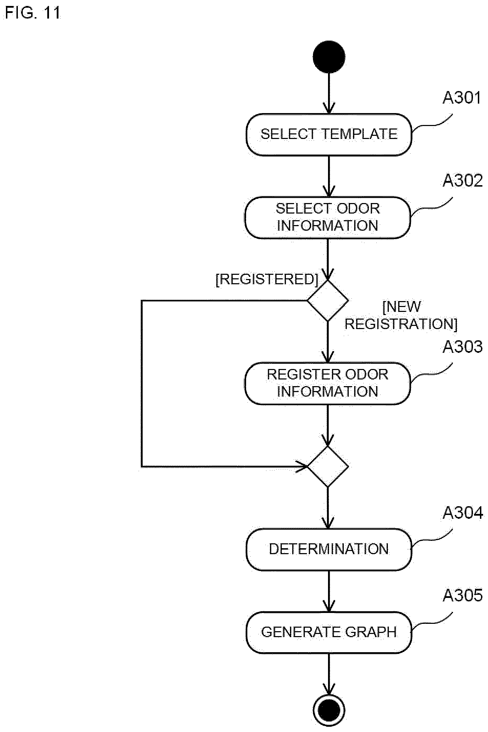

Next, odor determination of the determination target will be described. FIG. 11 is an activity diagram showing a flow of odor determination. When the information processing apparatus 1 receives a determination processing instruction from any one of the information processing terminal 3, the information processing terminal 5, and the measurement apparatus 6, the presentation unit 105 displays a template selection screen (not shown). In the template selection screen, a template that can be used for odor determination is presented in a selectable state, and when a template is selected by the information processing terminal 3, etc., the acquisition unit 102 receives the selection (A301). Subsequently, the presentation unit 105 displays an odor information selection screen (not shown). On the odor information selection screen, the odor information of odor as a determination target is presented in a selectable state, and when the odor information is selected by the information processing terminal 3, etc., the acquisition unit 102 receives the selection (A302) and acquires the odor information. Acquisition of the odor information is performed by selecting and acquiring the selected one from the storage unit (not shown), and at this timing, registration of the odor information may be received (A303). Selection of template and selection of odor information may be performed on the same screen.

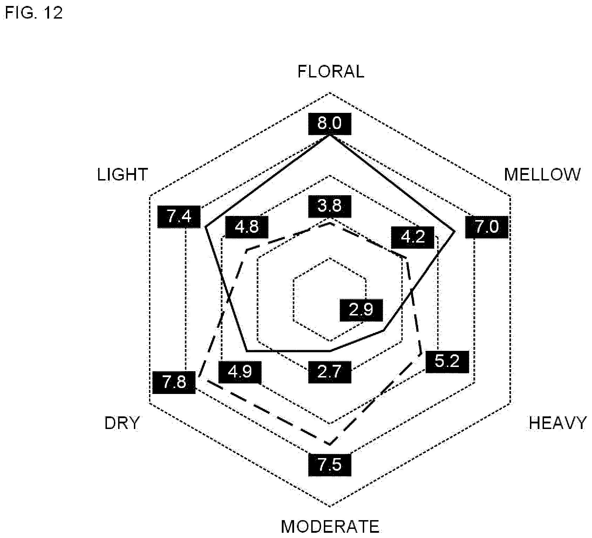

When a template and odor information are selected, the determination unit 104 performs determination of odor information of the determination target for each index based on a result of machine learning (A304). Then, the presentation unit 105 generates a graph based on the determination result by the determination unit 104 (A305), and presents the generated graph to the information processing terminal 3, etc. in a visible manner. At this time, the presentation unit 105 can present respective determination result of two or more determination targets by the determination unit 104 in a comparable manner, such as overlay two or more graphs. FIG. 12 shows an example of a graph presented by the presentation unit 105. As shown in the drawing, odor of the determination target is represented by an index based on human sensation.

### 9. Utilization example of information processing apparatus 1

By utilizing determination of odor with the information processing apparatus 1, for instance, by presenting a determination result along with a template used for a product to be sold in online shopping, etc., a purchaser can determine odor to be compared using the same template and visually confirm difference. Specifically, the determination result is presented at the time during wine selling, and the purchaser can determine odor the wine of his/her own preference, compare products based on the result, and select a wine that is close to his/her own preference. In addition, determination of odor by the information processing apparatus 1 can provide a non-personal and efficient determination in product development.

### 10. Others

The present invention may be provided in each of the following aspects.

The information processing apparatus, wherein: the index corresponds to word or phrase representing human sensation.

The information processing apparatus, wherein: the template is configured in such a manner that the evaluation is input by input or selection of a value, and the value corresponds to specified number of evaluation stage.

The information processing apparatus, wherein: the learning unit is configured to perform the machine learning based on a selected learning algorithm among two or more learning algorithms.

The information processing apparatus, comprising: a presentation unit configured to generate a graph based on a determination result by the determination unit and present the generated graph in a visible manner.

The information processing apparatus, wherein: the presentation unit is configured to present respective determination result of two or more determination targets by the determination unit in a comparable manner.

A program that causes a computer to operate as an information processing apparatus, wherein: the program causes the computer to function as the information processing apparatus.

Of course, the present invention is not limited to the above aspects.

### REFERENCE SIGNS LIST

1: Information processing apparatus
2: Network
3: Information processing terminal
4: Measurement apparatus
5: Information processing terminal
6: Measurement apparatus
11: Processing unit
12: Storage unit
13: Temporary storage unit
14: External apparatus connection unit
15: Communication unit
16: Communication bus
37: Display unit
41: Connection unit
42: Controller
43: Detection unit
51: Processing unit
52: Storage unit
53: Temporary storage unit
54: External apparatus connection unit
55: Communication unit
56: Input unit
57: Display unit
58: Communication bus
61: Communication unit
62: Controller
63: Detection unit
64: Input unit
65: Display unit
100: System
101: Generation unit
102: Acquisition unit
103: Learning unit
104: Determination unit
105: Presentation unit
300: Input screen
301: Template name input column
302: Index input column
303: Graph
310: Input screen
311: Template name display column
312: Evaluation target name input column
313: Evaluation value input column
314: Graph
315: Information selection object

## Claims

1. An information processing apparatus, comprising:
a generation unit configured to generate a template that allows input of evaluation for each index according to specified number of index;
an acquisition unit configured to acquire evaluation input to the template and odor information corresponding to the evaluation, wherein
the odor information is a detection result detected by an odor sensor;
a learning unit configured to perform machine learning using a set of the evaluation and the odor information as teaching data; and
a determination unit configured to determine odor information of a determination target for the each index based on a result of the machine learning.

2. The information processing apparatus according to claim 1, wherein:
the index corresponds to word or phrase representing human sensation.

3. The information processing apparatus according to claim 2, wherein:
the template is configured in such a manner that the evaluation is input by input or selection of a value, and
the value corresponds to specified number of evaluation stage.

4. The information processing apparatus according to claim 2, wherein:
the learning unit is configured to perform the machine learning based on a selected learning algorithm among two or more learning algorithms.

5. The information processing apparatus according to claim 2, comprising:
a presentation unit configured to generate a graph based on a determination result by the determination unit and present the generated graph in a visible manner.

6. The information processing apparatus according to claim 5, wherein:
the presentation unit is configured to present respective determination result of two or more determination targets by the determination unit in a comparable manner.

7. A program that causes a computer to operate as an information processing apparatus, wherein:
the program causes the computer to function as the information processing apparatus according to any one of claims 1 to 6.
